# EUROPÄISCHE PATENTSCHRIFT

(11) **EP 3 126 710 B1**
(45) Veröffentlichungstag und Bekanntmachung des Hinweises auf die Patenterteilung: **08.01.2020**
(21) Anmeldenummer: 14750146.4
(22) Anmeldetag: 02.08.2014
(51) Int. Cl.: F16H 3/00, F16H 3/089

(54) **GESCHWINDIGKEITS-WECHSELGETRIEBE FÜR EIN KRAFTFAHRZEUG**
GEARSHIFT TRANSMISSION FOR A MOTOR VEHICLE
BOÎTE DE CHANGEMENT DE VITESSE POUR UN VÉHICULE AUTOMOBILE

(30) Priorität: 31.03.2014 DE 102014004691
(43) Veröffentlichungstag der Anmeldung: 08.02.2017
(73) Patentinhaber: Audi AG, 85045 Ingolstadt (DE)
(72) Erfinder: HUMMEL, Steffen, 85055 Ingolstadt (DE)
(74) Vertreter: Lehle, Josef
(86) Internationale Anmeldenummer: PCT/EP2014/002135
(87) Internationale Veröffentlichungsnummer: WO 2015/149823

(56) Entgegenhaltungen:
- US-A- 4 132 133

## Beschreibung

Die vorliegende Erfindung betrifft ein Geschwindigkeits-Wechselgetriebe für ein Kraftfahrzeug gemäß dem Oberbegriff des Patentanspruchs 1.

Derartige Wechselgetriebe sind als sogenannte Doppelkupplungsgetriebe bekannt und werden häufig in Kraftfahrzeugen verwendet. Neben einem guten Wirkungsgrad haben diese Getriebe unter anderem den Vorteil, dass sie ohne Unterbrechung der Zugkraft insbesondere automatisiert schaltbar sind, wobei im jeweils nicht aktivierten Teilgetriebe bereits eine Gangstufe vorwählbar ist, die dann durch Wechsel der Lastschaltkupplungen aktiviert wird. Dabei sind in einem möglichen Anwendungsfall zweckmäßig im einen Teilgetriebe die ungeraden Gänge (1, 3, 5, etc.) und im anderen Teilgetriebe die geraden Gänge (2, 4, 6, etc.) mittels entsprechender Zahnradsätze positioniert, die zum Beispiel über Synchronkupplungen mit der jeweiligen Eingangswelle oder der Abtriebswelle trieblich verbunden werden.

Wie oben erwähnt weist jedes der Teilgetriebe jeweils eine Lastschaltkupplung auf. Beispielsweise sind bei zwölf Vorwärtsgängen (das heißt ein 12-Gang-Doppelkupplungsgetriebe) insgesamt zwölf Radebenen notwendig. Der Rückwärtsgang kann dabei über eine separate Welle realisiert sein. Zum Schalten der Vorwärtsgänge sind dabei in gängiger Praxis sechs Schaltelemente (das heißt Synchronkupplungen) sowie ein Schaltelement für den Rückwärtsgang erforderlich. Zur Durchführung eines Schaltvorganges wird zunächst der jeweilige Gang vorgewählt. Anschließend wird das betreffende Teilgetriebe, das den Zahnradsatz zum vorgewählten Gang aufweist, mittels schließender Lastschaltkupplung aktiviert. Bei einem Gangwechsel wird sowohl die aktivierte Kupplung geöffnet als auch gleichzeitig die passive Lastschaltkupplung geschlossen. Bei einem solchen Gangwechsel handelt es sich tatsächlich um einen Teilgetriebe-Wechsel. Das heißt, dass im Stand der Technik Lastschaltvorgänge (das heißt zugkraftunterbrechungsfreie Schaltungen) nur durch Teilgetriebe-Wechsel möglich sind. Zum Beispiel können Lastschaltungen nur zwischen geraden und ungeraden Gängen erfolgen.

Dies führt bei einem sehr sportlichen Fahrzeug zu folgender Schaltabfolge: Zunächst wird im ersten Gang angefahren und anschließend der zweite Gang vorgewählt. Dann erfolgt ein Getriebewechsel vom Teilgetriebe des ersten Ganges auf das Teilgetriebe des zweiten Ganges. Bei einem direkten Gangwechsel des Fahrers vom ersten Gang zum dritten Gang wird zunächst das Teilgetriebe des ersten Ganges, anschließend das Teilgetriebe des zweiten Ganges und dann erneut das Teilgetriebe des ersten Ganges aktiviert, da dies den dritten Gang beinhaltet. Bei dieser Schaltabfolge ist die Verweildauer im Teilgetriebe des zweiten Ganges sehr kurz, wodurch sich hohe Bauteilbelastungen der Kupplungen ergeben.

Die US 4 132 133 A zeigt ein gattungsgemäßes Getriebe mit einem ersten und einem zweiten Teilgetriebe, wobei die Teilgetriebe mit Kupplungen verbunden sind und in einem Lastschaltvorgang eines der Teilgetriebe durch Schalten einer der Lastschaltkupplungen aktivierbar ist, während das andere Teilgetriebe durch Schalten einer anderen der Lastschaltkupplungen deaktivierbar ist. Ferner ist ein eine Übersetzungsänderung bewirkendes Vorgelege mit einer Vorgelegewelle vorgesehen, wobei auf der Vorgelegewelle zwei zusammengeschaltete Stirnzahnräder gelagert sind.

Aus der WO 2011/031268 A1 ist der Einsatz einer Dreifachkupplung in einem Getriebe bekannt. Das Getriebe ist nicht in zwei, sondern in drei separat voneinander, das heißt alternierend arbeitenden Teilgetrieben aufgeteilt, von denen jedem Teilgetriebe eine der drei Lastschaltkupplungen der Dreifachkupplungen zugeordnet ist. Es ist somit ein gängiges Doppelkupplungsgetriebe mit einem weiteren Teilgetriebe (einschließlich zugeordneter Lastschaltkupplung) erweitert.

Die Aufgabe der Erfindung besteht darin, das gattungsgemäße Wechselgetriebe so weiterzubilden, dass es bei einer baulich günstigen Konstruktion größere Freiheitsgrade in der Funktionalität und in der Auslegung der Gangstufen ermöglicht.

Die Aufgabe ist durch die Merkmale des Patentanspruches 1 gelöst. Bevorzugte Weiterbildungen der Erfindung sind in den Unteransprüchen offenbart.

Erfindungsgemäß ist das aus dem Stand der Technik bekannte herkömmliche Zweifach-Lastschaltkupplungseinheit eines herkömmlichen Doppelkupplungsgetriebes erweitert zu einer Dreifach-Lastschaltkupplungseinheit, bei der das Getriebe eine zusätzliche Getriebestufe aufweist, die mit einer dritten Lastschaltkupplung zuschaltbar ist. Die dritte Lastschaltkupplung ist zusammen mit den ersten und zweiten Lastschaltkupplungen Bestandteil der Lastschalteinheit. Gemäß dem Patentanspruch 1 ist die zusätzliche Getriebestufe ein Vorgelege, das dem ersten Teilgetriebe oder dem zweiten Teilgetriebe zugeordnet bzw. untergeordnet ist und dort eine Übersetzungsänderung bewirkt. Das Vorgelege kann alternierend über die dritte Lastschaltkupplung zugeschaltet werden.

Im Unterschied zum oben genannten Getriebe aus der WO 2011/031268 A1 weist das Getriebe nach wie vor lediglich zwei Teilgetriebe auf, die nach Art eines herkömmlichen Doppelkupplungsgetriebes alternierend arbeiten. Mit der zusätzlichen dritten Lastschaltkupplung der Dreifachkupplung kann eines der beiden Teilgetriebe in unterschiedlicher Weise in den Antriebsstrang geschaltet werden.

Dies ermöglicht die beiden folgenden wesentlichen Vorteile: So kann insgesamt die Anzahl der Radebenen reduziert werden. Gleiches trifft auch für die Anzahl der Schaltelemente (das heißt Synchronisierkupplungen) zu. Zudem ist auch die Anzahl der erforderlichen Gangsteller reduziert. Zudem können in dem Teilgetriebe mit dem Vorgelege die dort positionierten Gang-Zahnradsätze doppelt genutzt werden, wodurch eine Vielzahl von Gangstufen realisiert werden kann, die alle über die nunmehr zwei Lastschaltkupplungen dieses Teilgetriebes lastschaltbar sind. Dabei ist stets nur eine Kupplung geschlossen. Ferner sind in dem besagten Teilgetriebe von der üblichen Gangfolge abweichende Gangschaltungen möglich, die zum Beispiel ein Überspringen einer Gangstufe oder abweichende Getriebeauslegungen zulassen. Zum Beispiel könnte nach dem Anfahren im 1. Gang bei definierten Betriebsbedingungen des Kraftfahrzeugs der 2. Gang übersprungen und stattdessen zugkraftunterbrechungsfrei und ohne Vorwählen einer anderen Gangstufe in den 3. Gang geschaltet werden.

Das Vorgelege ist erfindungsgemäß durch zumindest auf der Eingangswelle und der Abtriebswelle angeordnete Stirnzahnräder, insbesondere mit zwei axial benachbarten Zahnradsätzen gebildet, von denen die auf der Abtriebswelle gelagerten Stirnzahnräder zusammengeschaltet sind, das antreibende Stirnzahnrad auf einer dritten Eingangswelle der Lastschaltkupplung und das abtreibende Stirnzahnrad fest auf der Eingangswelle des korrespondierenden Teilgetriebes angeordnet ist. Daraus resultiert eine in axialer Richtung kurz bauende, robuste und im Wirkungsgrad günstige Konstruktion des Wechselgetriebes.

Des Weiteren können die drei Lastschaltkupplungen koaxial mit den drei Eingangswellen des Getriebes angeordnet und zu einer zum Beispiel in das Getriebe integrierten Kupplungseinheit zusammengebaut sein, die alternierend elektrohydraulisch beaufschlagbar ist.

Ferner können in an sich bekannter Weise die Teilgetriebe in gerade und ungerade Gänge aufgeteilt sein, wobei das Vorgelege dem Teilgetriebe mit den ungeraden Gängen zugeordnet ist, um zum Beispiel ein Gangüberspringen im Anfahr- oder unteren Beschleunigungsreich des Kraftfahrzeugs zu ermöglichen. Dabei kann bevorzugt die Übersetzungsänderung des Vorgeleges so ausgelegt sein, dass über das Vorgelege und bei geschlossener dritter Kupplung K3 die ungeraden Gänge 1, 5 und gegebenenfalls 9 ff. und ohne das Vorgelege und geschlossener Kupplung K2 direkt die Gänge 3, 7 und gegebenenfalls 11 ff. schaltbar sind. Das heißt es wird z.B. vom ersten Gang auf den dritten Gang geschaltet, ohne dass ein Gang vorgewählt werden muss.

In einer vorteilhaften Weiterbildung der Erfindung kann in das Teilgetriebe mit den geraden Gängen ein weiteres Vorgelege integriert sein, das mittels Schaltkupplungen überbrückbar oder zuschaltbar ist. Damit können auch in dem zweiten Teilgetriebe Gang-Zahnradsätze doppelt genutzt werden, wodurch bei weiter verminderten Zahnradsätzen vermehrt Gangstufen geschaffen sind. Es versteht sich, dass mit weniger Gang-Zahnradsätzen auch die Anzahl an Synchronkupplungen und Gangstellern verminderbar ist. Insbesondere kann das weitere Vorgelege ebenfalls durch zwei Stirnzahnradsätze gebildet sein, dessen antreibendes Stirnzahnrad mit der ersten Eingangswelle kuppelbar ist, dessen auf der Abtriebswelle gelagerte Stirnzahnräder zusammengeschaltet sind und dessen abtreibendes Stirnzahnrad fest auf einer auf der Eingangswelle gelagerten und Schaltzahnräder tragenden Hohlwelle angeordnet ist. Die Erfindung ist jedoch nicht auf diese spezielle Anordnung beschränkt. Vielmehr müssen die Schaltzahnräder nicht zwangsläufig auf der Hohlwelle angeordnet sein, sondern können auch die Festzahnräder auf der Hohlwelle angeordnet sein.

In vorteilhafter Weise können dabei die auf der Abtriebswelle gelagerten Stirnzahnräder des Vorgeleges über eine Schaltkupplung direkt auf die Abtriebswelle kuppelbar sein und somit in einer zweiten Funktion baulich günstig unmittelbar zwei Gang-Zahnradsätze bilden. Diese konstruktive Ausführung ist auf die beiden Vorgelege anwendbar.

In einer besonders vorteilhaften Weiterbildung der Erfindung können auch die auf der Abtriebswelle gelagerten Stirnzahnräder des dem Teilgetriebe zugeordneten Vorgeleges mittels einer Schaltkupplung direkt mit der Abtriebswelle trieblich verbindbar sein und somit eine weitere Reduzierung der bei einer definierten Ganganzahl des Wechselgetriebes erforderlichen Zahnradsätze ermöglichen.

Demzufolge können bei drei Schaltkupplungen (Synchronkupplungen) auf der gemeinsamen Abtriebswelle und einer Schaltkupplung (Synchronkupplung) auf der Eingangswelle des einen Teilgetriebes bis zu 12 Vorwärtsgänge alternierend über die drei Kupplungen K1, K2, K3 schaltbar sein.

Schließlich kann in einer bevorzugten Ausgestaltung der Erfindung für Kraftfahrzeuge mit Allradantrieb die gemeinsame Abtriebswelle über ein Zwischenachsdifferenzial auf ein hinteres und ein vorderes Achsdifferenzial des Kraftfahrzeugs abtreiben. In einer konstruktiven Realisierung können, in der Axialrichtung betrachtet, zwischen den Lastschaltkupplungen K1, K2, K3 und dem Zwischenachsdifferenzial die Teilgetriebe angeordnet sein.

Die Lastschalteinheit kann ein trommelförmiges Kupplungsgehäuse aufweisen, das drehfest mit einem antreibenden Wellenabschnitt verbunden ist. Innerhalb des trommelförmigen Kupplungsgehäuses sind Kupplungskörper vorgesehen, die jeweils drehfest an den Eingangswellen angebunden sind. Die Kupplungskörper können über Kupplungslamellen in Eingriff mit dem trommelförmigen Kupplungsgehäuse sein.

Mehrere Ausführungsbeispiele der Erfindung sind im Folgenden anhand der anhängenden, schematischen Zeichnung näher erläutert. Es zeigen:
- Fig. 1: ein Geschwindigkeits-Wechselgetriebe für Kraftfahrzeuge mit drei Lastschaltkupplungen und zwei nachgeschalteten Teilgetrieben, von denen eines mit einem Vorgelege kombiniert ist;
- Fig. 2: eine Schaltmatrix des Wechselgetriebes nach Fig. 1;
- Fig. 3: ein weiteres Wechselgetriebe gemäß Fig. 1, jedoch mit einem weiteren, in das zweite Teilgetriebe integrierten Vorgelege;
- Fig. 4: eine Schaltmatrix des Wechselgetriebes nach Fig. 3;
- Fig. 5: ein zur Fig. 3 alternatives Wechselgetriebe, bei dem das integrierte Vorgelege zusätzlich als Gang-Zahnradsatz schaltbar ist;
- Fig. 6: eine Schaltmatrix des Wechselgetriebes nach Fig. 5;
- Fig. 7: ein weiteres Wechselgetriebe nach den Fig. 1, 3 oder 5, bei dem das dem ersten Teilgetriebe zugeordnete Vorgelege ebenfalls als Gang-Zahnradsatz nutzbar ist;
- Fig. 8: eine Schaltmatrix des Wechselgetriebes nach Fig. 7;
- Fig. 9: ein zu den vorstehenden Fig. alternatives Wechselgetriebe für ein Allrad getriebenes Kraftfahrzeug mit nur drei Schaltkupplungen auf der Abtriebswelle und einer Schaltkupplung auf einer der Eingangswellen zum Schalten von bis zu 12 Vorwärtsgängen; und
- Fig. 10: eine Schaltmatrix des Wechselgetriebes nach Fig. 9.

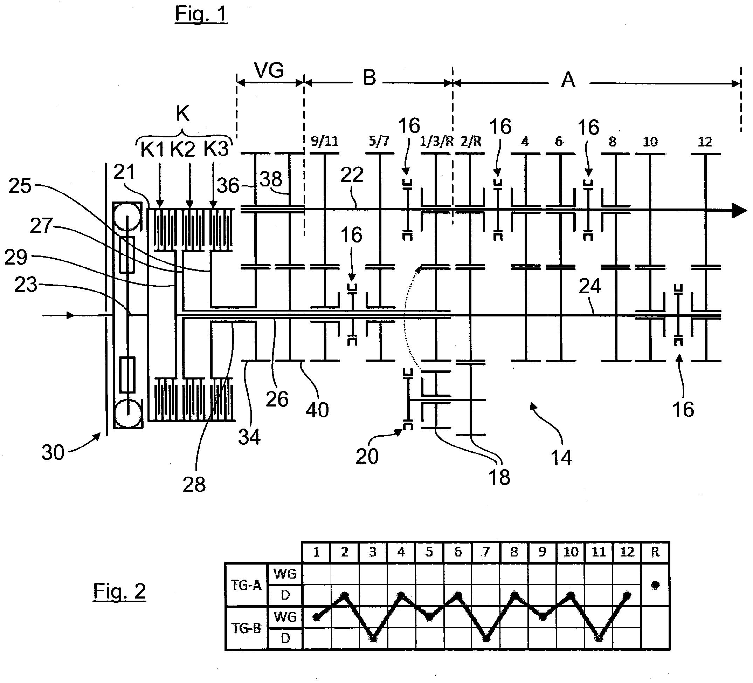

In der Fig. 1 ist als Blockschaltbild ein Geschwindigkeits-Wechselgetriebe 14 für Kraftfahrzeuge dargestellt, das im Ausführungsbeispiel zwölf Vorwärtsgänge 1 bis 12 und insgesamt drei Rückwärtsgänge R aufweist, die durch miteinander kämmende Zahnradsätze gebildet sind, wobei die Zahnradsätze in an sich bekannter Weise über Schaltkupplungen bzw. Synchronkupplungen (einheitlich mit 16 bezeichnet) an den Loszahnrädern schaltbar sind.

Die Zahnradsätze mit den Festzahnrädern und den schaltbaren Loszahnrädern sind in zwei Teilgetriebe A und B aufgeteilt, wobei dem Teilgetriebe B die ungeraden Vorwärtsgänge (von links nach rechts auf der Zeichnung) 9/11, 5/7 und 1/3 zugeordnet sind, während über das Teilgetriebe A die geraden Gänge 2, 4, 6, 8, 10, 12 über entsprechend viele Zahnradsätze schaltbar sind.

Insgesamt sind in der Fig. 1 mit den Kupplungen K1, K2 und K3 drei Rückwärtsgänge R schaltbar. Die in der Übersetzung unterschiedlichen Rückwärtsgänge R können über die Zahnradsätze 1/3/R im Teilgetriebe B oder 2/R im Teilgetriebe A geschaltet werden, indem zwei Umkehrzahnräder 18 (auf der Zeichnung in die Zeichenebene geklappt dargestellt) über eine Synchronkupplung 20 zusammengeschaltet und durch Schließen einer der Synchronkupplungen 16 des 1. oder des 2. Vorwärtsganges aktiviert werden. In einer technischen Realisierung ist sowohl der Rückwärtsgang (mit der Lastschaltkupplung K1 geschaltet) als auch der erste Gang gleichzeitig eingelegt und daher nur ein Rückwärtsgang verwirklicht.

Die Zahnradsätze für die besagten Vorwärtsgänge 1 bis 12 sind auf der gemeinsamen Abtriebswelle 22 und auf drei Eingangswellen 24, 26, 28 des Wechselgetriebes 14 angeordnet, wobei die koaxialen Eingangswellen 26, 28 entsprechend als Hohlwellen radial über der durchgehenden Eingangswelle 24 ausgebildet sind.

Die Eingangswellen 24, 26, 28 sind mit je einer zu einer Kupplungseinheit K zusammengebauten Lastschaltkupplung K1, K2, K3 verbunden. Die Kupplungseinheit K kann zum Beispiel über einen Drehschwingungsdämpfer 30 von einer Brennkraftmaschine angetrieben sein. Die Kupplungen K1, K2, K3 können über eine nicht dargestellte elektrohydraulische Getriebesteuerung alternierend geschlossen werden.

Die Lastschalteinheit oder Kupplungseinheit K kann gemäß der Fig. 1 ein trommelförmiges Kupplungsgehäuse 21 aufweisen, das drehfest mit einem antreibenden Wellenabschnitt 23 verbunden ist. Innerhalb des trommelförmigen Kupplungsgehäuses 21 sind Kupplungskörper 25, 27 und 29 vorgesehen, die jeweils drehfest an den Eingangswellen 24, 26, 28 angebunden sind. Die Kupplungskörper 25, 27, 29 sind alternierend über Kupplungslamellen in Eingriff mit dem trommelförmigen Kupplungsgehäuse 21 bringbar.

Dabei wird über die geschlossene Kupplung K1 die Eingangswelle 24 des Teilgetriebes A angetrieben, während die Kupplung K2 auf die Eingangswelle 26 des Teilgetriebes B wirkt.

Die Kupplung K3 treibt im geschlossenen Zustand die Eingangswelle 28 an, die trieblich mit einem Vorgelege VG gekoppelt ist, das im Teilgetriebe B zwei Getriebestufen bereitstellt. Das Vorgelege VG weist ein antreibendes Stirnzahnrad 34 auf der Eingangswelle 28, zwei axial benachbarte und zusammengeschaltete Stirnzahnräder 36, 38 auf der Abtriebswelle 22 und schließlich ein auf der Eingangswelle 26 fest angeordnetes Abtriebszahnrad 40 auf. Baulich ist das Vorgelege VG in das Teilgetriebe B integriert.

Das Vorgelege VG weist eine von 1:1 abweichende Übersetzung, beispielsweise eine Übersetzung um zwei Gangstufen ins Langsamere auf, so dass im Teilgetriebe B über die Kupplung K2 und die jeweilige Synchronkupplung 16 direkt die Gänge 3, 7, 11 über die entsprechenden Zahnradsätze und bei geschlossener Kupplung K3 über das Vorgelege VG und die gleichen Zahnradsätze die Gänge 1, 5, 9 schaltbar sind.

Dies zeigt beispielsweise die Schaltmatrix gemäß Fig. 2, bei der zu den jeweiligen Vorwärtsgängen 1 bis 12 das aktivierte Teilgetriebe A oder B und zum Teilgetriebe B der Schaltzustand D (= direkt über die Kupplung K2) oder WG (Kraftfluss über die Kupplung K3 und das Vorgelege VG) angezeigt ist.

Wie aus der Schaltmatrix entnehmbar ist, sind im 1. Gang bei geschlossener Kupplung K3 das Teilgetriebe B (TG-B) und das Vorgelege VG (WG) aktiviert.

Der Kraftfluss verläuft von der Kupplung K3 und der Eingangswelle 28 auf das Vorgelege VG und von diesem über die Eingangswelle 26 und den Zahnradsatz 1/3 auf die Abtriebswelle 22, die zum Beispiel über eine nicht dargestellte Kardanwelle ein hinteres Achsdifferenzial des Kraftfahrzeugs antreibt. Die korrespondierende Synchronkupplung 16 auf der Abtriebswelle 22 ist dabei geschlossen.

Soll der 2. Gang geschaltet werden, so kann über die nicht dargestellten Schaltsteller der Getriebesteuerung bereits die korrespondierende Synchronkupplung 16 im Teilgetriebe A geschlossen werden.

Anschließend kann ohne Zugkraftunterbrechung durch Öffnen der Kupplung K3 und gleichzeitiges Schließen der Kupplung K1 der 2. Gang im Teilgetriebe A (vergleiche Fig. 2, TG-A, D) aktiviert werden.

Der 3. Gang wird über den noch geschalteten Zahnradsatz 1/3 aktiviert, indem die Kupplung K1 geöffnet und gleichzeitig die Kupplung K2 geschlossen wird. Über die Kupplung K2 treibt die Brennkraftmaschine im Teilgetriebe B direkt (unter Umgehung des Vorgeleges VG) den Zahnradsatz 1/3 an (vergleiche Fig. 2, TG-B, D).

Durch die dritte Kupplung K3 und das Vorgelege VG kann über die Getriebesteuerung bei definierten Betriebssituationen auch vom 1. Gang im Teilgetriebe B direkt in den 3. Gang des Teilgetriebes B geschaltet werden. Dazu ist lediglich die Kupplung K3 im zum Beispiel 1. Gang zu öffnen und gleichzeitig die Kupplung K2 für den 3. Gang zu schließen.

Die weiteren Schaltvorgänge können wie in der Schaltmatrix gemäß Fig. 2 dargestellt erfolgen. Beim Hochschalten und beim Rückschalten der Gänge 1/3, 5/7 und 9/11 können wie vorstehend beschrieben bei Bedarf gerade Gänge übersprungen werden. Dennoch ist stets ein Schalten ohne Zugkraftunterbrechung innerhalb des Teilgetriebes B gegeben.

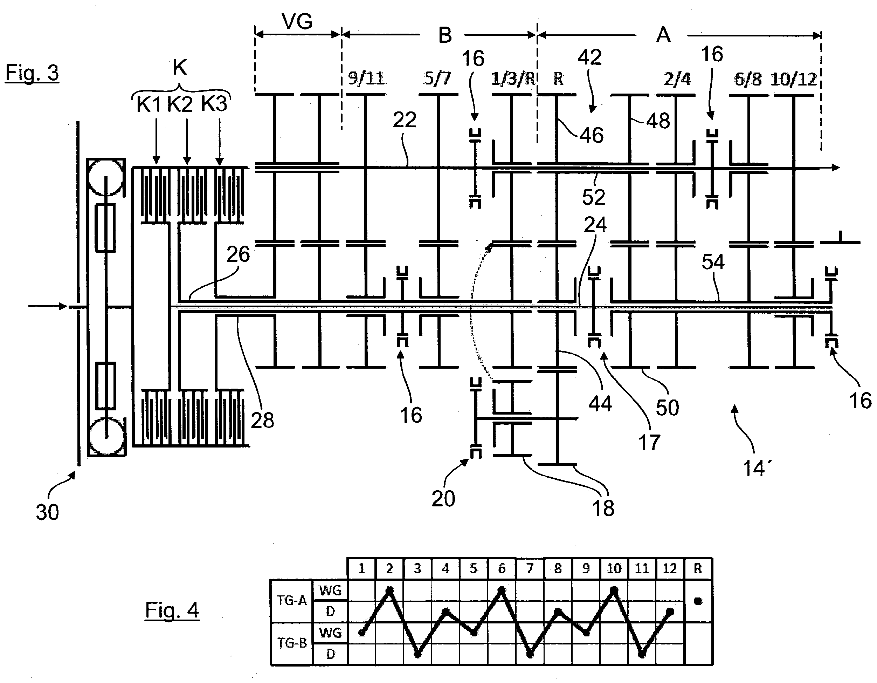

Die Fig. 3 bis 10 zeigen weitere Ausführungsbeispiele der Erfindung, wobei funktionell gleiche Teile mit gleichen Bezugszeichen versehen und jeweils nur die zu den Fig. 1 und 2 wesentlichen Unterschiede beschrieben sind.

Gemäß den Fig. 3 und 4 ist in das Wechselgetriebe 14' bzw. in dessen Teilgetriebe A ebenfalls ein Vorgelege 42 integriert, mit einem antreibenden Loszahnrad 44, zwei zusammengeschalteten, auf einer Hohlwelle 52 angeordneten Festzahnrädern 46, 48 und einem abtreibenden Festzahnrad 50 auf einer weiteren Hohlwelle 54. Die Hohlwelle 52 ist dabei auf der Abtriebswelle 22 und die Hohlwelle 54 mit Festzahnrädern der Zahnradsätze 2/4 und 6/8 auf der Eingangswelle 24 des Wechselgetriebes 14' frei drehbar gelagert.

Der Zahnradsatz 10/12 des Teilgetriebes A weist ein Festzahnrad auf der Abtriebswelle 22 und ein schaltbares Loszahnrad auf der Hohlwelle 54 auf, das mittels einer Synchronkupplung 16 mit der Hohlwelle 54 kuppelbar ist.

Das Stirnzahnrad 44 des Vorgeleges 42 oder die Hohlwelle 54 sind über eine weitere Synchronkupplung 16 mit der Eingangswelle 24 kuppelbar; gleiches gilt für die beiden Zahnradsätze 2/4 und 6/8, die über eine Synchronkupplung 16 zusätzlich mit der Abtriebswelle 22 trieblich verbindbar sind.

Mittels der Synchronkupplung 16 auf der Eingangswelle 24 kann entweder durch Kuppeln des Antriebszahnrads 44 das Vorgelege 42 aktiviert werden, so dass dieses über die Zahnräder 44, 46, 48, 50 auf die Hohlwelle 54 abtreibt, oder es kann durch Umschalten der Synchronkupplung 16 direkt die Hohlwelle 54 angetrieben werden. Bei einer entsprechenden Übersetzungsauslegung des Vorgeleges 42 abweichend von 1:1 können die Gang-Zahnradsätze 2/4, 6/8, 10/12 zweifach genutzt werden.

Durch das überbrückbare Vorgelege 42, dessen Zahnräder 44, 46 zugleich in Verbindung mit den Umkehrzahnrädern 18 wie dargestellt einen Rückwärtsgang R bilden können, kann der Getriebeaufwand auch im Teilgetriebe A durch Doppelnutzung der Gang-Zahnradsätze entsprechend vermindert werden.

Die Fig. 4 zeigt eine beispielsweise Schaltmatrix zum Wechselgetriebe 14', wobei im Teilgetriebe A (TG-A) und im Teilgetriebe B (TG-B) die Schaltzustände D (= direkter Kraftfluss ohne Vorgelege VG bzw. 42) und WG (mit Vorgelege VG bzw. 42) angezeigt sind. Zum Beispiel verläuft der Kraftfluss im Teilgetriebe A im 2. Gang über das Vorgelege 42 und im 4. Gang direkt, d.h. unter Überbrückung des Vorgeleges 42, auf die Hohlwelle 54. Die jeweiligen Schalt-Gangzahnsätze können über die Synchronkupplungen 16 entsprechend vorgewählt werden.

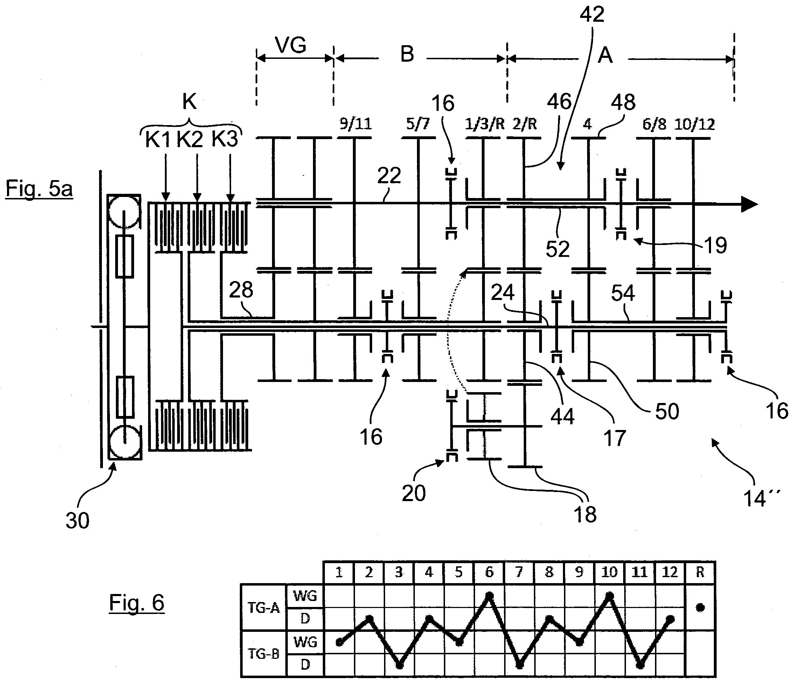

Die Figuren 5a bis 5c zeigen ein weiteres Wechselgetriebe 14", das im Vergleich zur Fig. 3 wie folgt zur Einsparung eines Gang-Zahnradsatzes im Teilgetriebe A abweicht:
Gemäß Fig. 5a sind die Zahnräder des Vorgeleges 42 in ihrer Übersetzung so ausgeführt, dass dessen Stirnzahnradsätze 44, 46 und 48, 50 zugleich die Zahnradsätze 2/R und 4 bilden können. Der in Fig. 3 dargestellte Zahnradsatz 2/4 kann dementsprechend entfallen. In der Fig. 5a ist auf der Abtriebswelle 22 eine Schaltkupplung 19 angeordnet, die mit der Vorgelege-Hohlwelle 52 kuppelbar ist, auf der die Festzahnräder 46, 48 angeordnet sind. Alternativ ist die Schaltkupplung 19 auf der Abtriebswelle 22 mit dem Loszahnrad des Zahnradsatzes 6/8 kuppelbar.

Über die Schaltkupplung 17 auf der Eingangswelle 24 kann das Vorgelege-Antriebszahnrad 44 gekuppelt werden: In diesem Fall ist das Vorgelege 42 aktiviert und wird über die Hohlwelle 54 auf die Zahnradsätze 6/8 oder 10/12 des Teilgetriebes A abgetrieben.

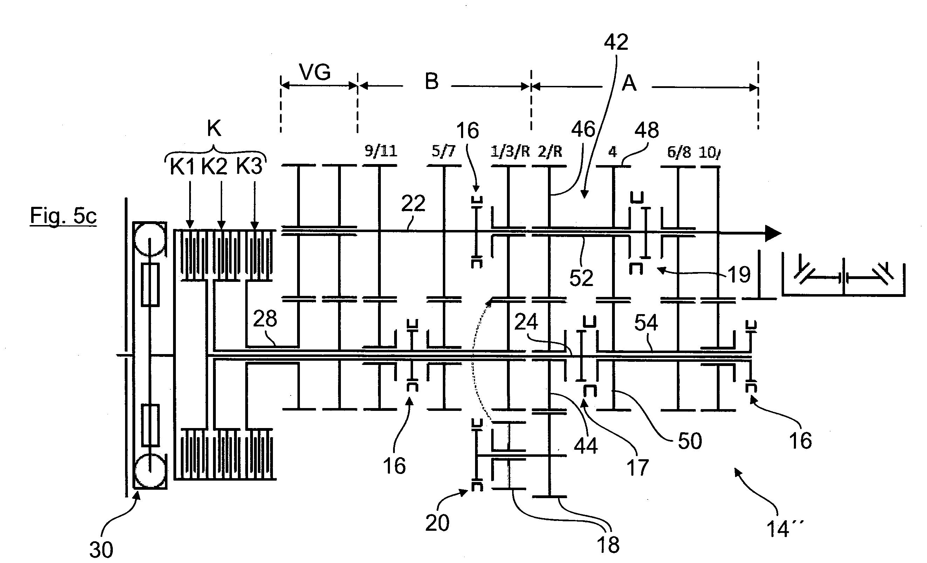

In der Fig. 5c ist die Anordnung bei geschaltetem 2. Gang gezeigt. In diesem Fall ist die Schaltkupplung 17 auf der Eingangswelle 24 mit dem Vorgelege-Antriebszahnrad 44 gekuppelt. Zusätzlich ist die Schaltkupplung 19 auf der Abtriebswelle 22 mit der Vorgelege-Hohlwelle 52 gekuppelt. D.h. das auf der Vorgelege-Hohlwelle 52 angeordnete Festzahnrad 46 ist direkt mit der Abtriebswelle 22 verbunden und entsprechend der 2. Gang geschaltet. Der Momentenfluß verläuft im 2. Gang von der Eingangswelle 24 über die Schaltkupplung 17, das Vorgelege-Antriebszahnrad 44, das Vorgelege-Stirnzahnrad 46, die Hohlwelle 52 sowie die Schaltkupplung 19 auf die Abtriebswelle 22.

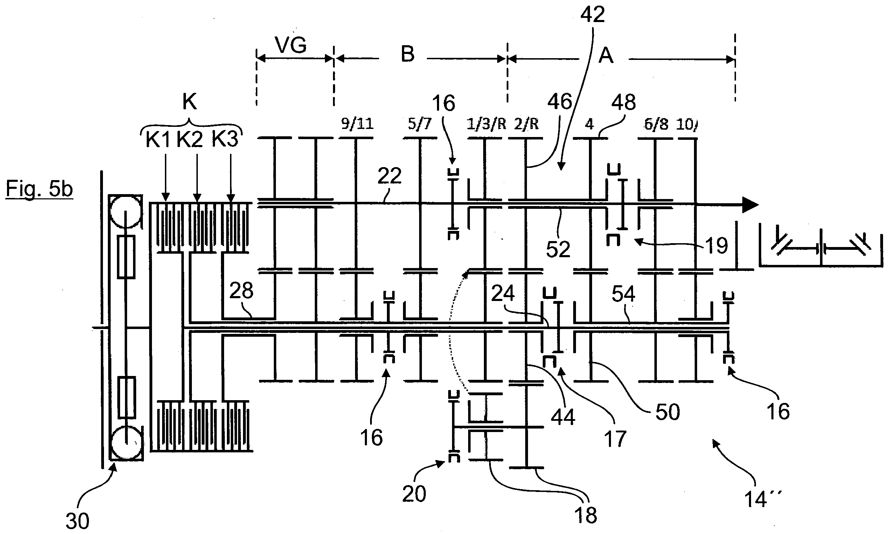

In der Fig. 5b ist die Anordnung bei geschaltetem 4. Gang gezeigt. Demzufolge kuppelt die Schaltkupplung 17 auf der Eingangswelle 24 das abtreibende Vorgelege-Festzahnrad 50. Die Schaltkupplung 19 auf der Abtriebswelle 22 kuppelt - wie bei der Schaltung des 2. Ganges - die Vorgelege-Hohlwelle 52. D.h. das auf der Vorgelege-Hohlwelle 52 angeordnete Festzahnrad 48 ist direkt mit der Abtriebswelle 22 verbunden und entsprechend der 4. Gang geschaltet. Der Momentenfluß verläuft im 4. Gang von der Eingangswelle 24 über die Schaltkupplung 17, das Vorgelege-Abtriebszahnrad 50, das Vorgelege-Stirnzahnrad 48 sowie die Schaltkupplung 19 auf die Abtriebswelle 22.

In der Fig. 5 - wie auch in den Fig. 1, 3, 7 - ist der 1. Gang und der 3. Gang über einen gemeinsamen Zahnradsatz 1/3 im Teilgetriebe B aktivierbar. Bei bestimmten Fahrsituationen (z.B. Ampelstart) kann durch Schalten der Lastschaltkupplungen K3 auf K2 innerhalb des Teilgetriebes B direkt vom 1. Gang auf den 3. Gang geschaltet werden, ohne dass im Teilgetriebe A der zweite Gang vorgewählt werden muss.

Durch ein solches direktes Hochschalten vom 1. Gang auf den 3. Gang wird die folgende, bei einem herkömmlichen Doppelkupplungsgetriebe bekannte Problematik gelöst: Bei einem solchen herkömmlichen Doppelkupplungsgetriebe ist das direkte Hochschalten vom 1. Gang in den dritten Gang nicht möglich. Vielmehr muss hier bei eingelegtem 1. Gang im ersten Teilgetriebe der 2. Gang im zweiten Teilgetriebe vorgewählt werden. Anschließend muss bei eingelegtem 2. Gang im zweiten Teilgetriebe der 3. Gang im ersten Teilgetriebe vorgewählt werden. Bei der oben angedeuteten Fahrsituation (Ampelstart) kann unter Umständen die Verweildauer im 2. Gang sehr kurz sein und nicht ausreichen, um ein Vorwählen des dritten Gangs zu ermöglichen. Entsprechend kann es zu einer Verzögerung beim Hochschalten in den 3. Gang kommen.

Das Vorgelege 42 bildet somit in der Fig. 5 neben seiner untersetzenden (oder übersetzenden) Funktion zugleich die Gang-Zahnradsätze des 2. und 4. Vorwärtsganges.

Die Fig. 6 zeigt dazu wieder eine beispielhafte Schaltmatrix zur Realisierung von 12 Vorwärtsgängen mit Einbindung der Vorgelege VG (WG) oder Direktdurchtriebe (D) in den Teilgetrieben A und B (TG-A, TG-B).

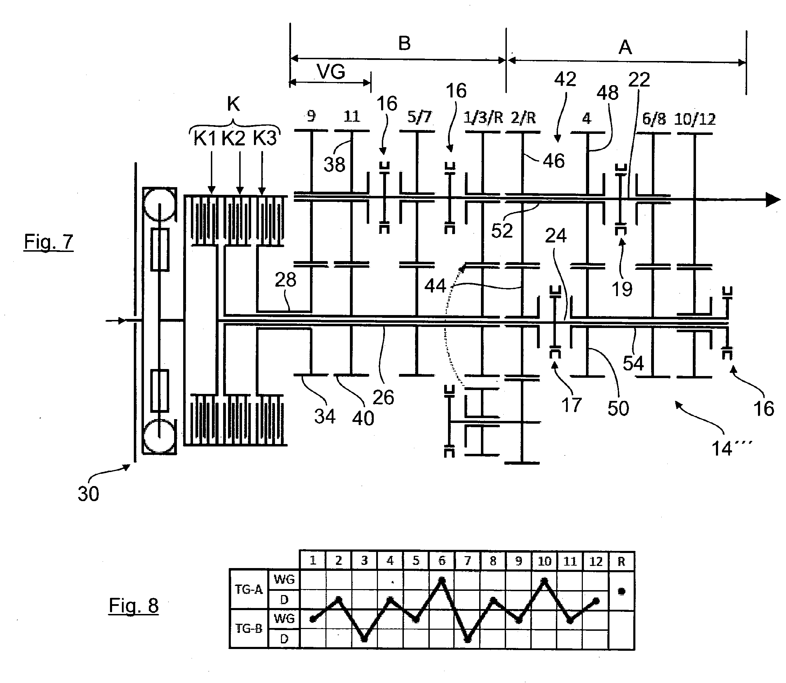

Die Fig. 7 zeigt eine weitere Modifikation des Wechselgetriebes 14"' mit Bezug zum Teilgetriebe B bzw. dessen nunmehr auch Gang-Zahnräder darstellenden Vorgeleges VG.

Dabei ist das Vorgelege VG mit seinen Zahnradsätzen 34, 36 und 38, 40 gegenüber Fig.1 so ausgelegt, dass die besagten Zahnradsätze bei entsprechend ausgelegten Übersetzungsverhältnissen die Vorwärtsgänge 9 und 11 bilden können, indem sie alternierend direkt über die axial angrenzende Synchronkupplung 16 auf die Abtriebswelle 22 schaltbar sind. Der separate Zahnradsatz 9/11 gemäß Fig. 1 kann dadurch entfallen. Eine beispielhafte Schaltmatrix dazu zeigt die Fig. 8.

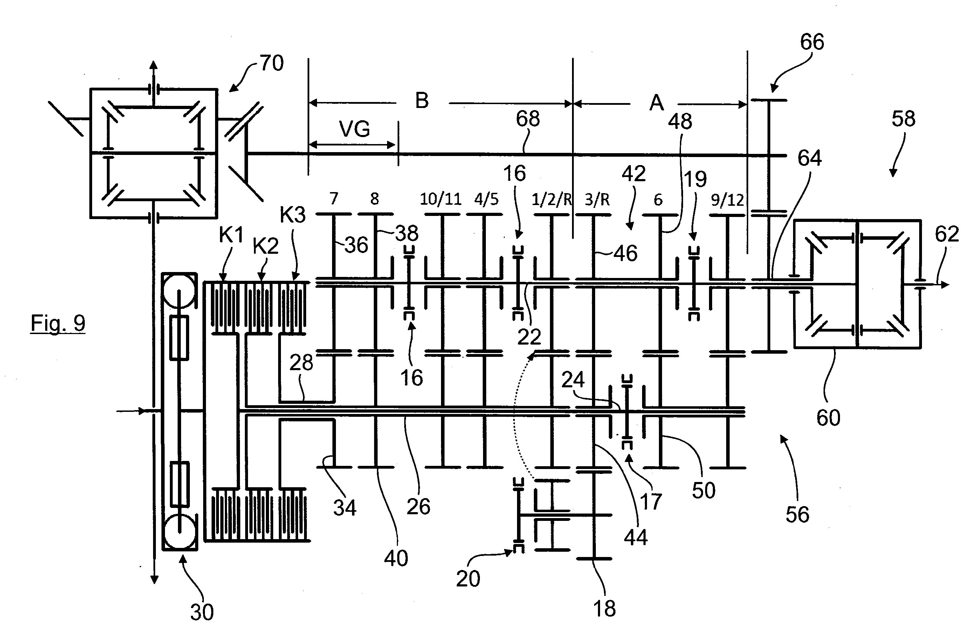

In der Fig. 9 ist ein Geschwindigkeits-Wechselgetriebe 56 für allradgetriebene Kraftfahrzeuge dargestellt, das wiederum nur in den relevanten Unterschieden beschrieben ist.

Dabei treibt die gemeinsame Abtriebswelle 22 der Teilgetriebe A und B auf das Ausgleichsgehäuse 60 eines Zwischenachsdifferenzials 58 ab, dessen eine leistungsaufgeteilte Halbwelle 62 zum Beispiel über eine Kardanwelle mit einem Hinterachsdifferenzial trieblich verbunden ist, während die zweite, hohle Halbwelle 64 über einen Stirnzahnradtrieb 66 und eine Antriebswelle 68 auf ein Vorderachsdifferenzial 70 des Kraftfahrzeugs wirkt. Die Differenziale 58 und 70 sind bevorzugt in das Wechselgetriebe 56 integriert.

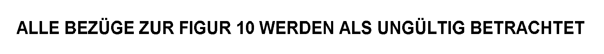

Abweichend zur Fig. 7 sind in den Teilgetrieben A und B die ungeraden und geraden Vorwärtsgänge wie folgt gemischt (von links nach rechts auf der Zeichnung) angeordnet:
Im Teilgetriebe B sind dies die Gänge 7, 8, 10/11, 4/5 und 1/2/R und im Teilgetriebe A die Gänge 3/R, 6, 9/12, die gemäß der Schaltmatrix in Fig. 10 entsprechend schaltbar sind.

Durch die gezeigte Anordnung der Vorgelege VG und 42, der zusätzlichen Lastschaltkupplung K3 und der Gangzahnradsätze gelingt es, mit nur drei Synchronkupplungen 16, 16, 19 auf der Abtriebswelle 22 und einer Synchronkupplung 17 auf der durchgehenden Eingangswelle 24 sämtliche Vorwärtsgänge 1 bis 12 ohne Unterbrechung der Zugkraft wie zur Fig. 1 vorbeschrieben automatisiert zu schalten.

Im Unterschied zu den vorhergehenden Ausführungsbeispielen sind in der Fig. 9 die Gangstufen so verteilt, dass benachbarte Gangstufen jeweils über einen gemeinsamen Zahnradsatz (10/11, 4/5 und 1/2) aktivierbar sind, und zwar ohne einen Teilgetriebe-Wechsel, sondern vielmehr innerhalb des Teilgetriebes B.

In der Fig. 9 ist das bereits weiter oben beschriebene direkte Hochschalten vom 1. Gang in den 3. Gang ermöglicht. Im Unterschied z.B. zur Fig. 5 ist in der Fig. 9 das direkte Hochschalten vom 1. auf den 3. Gang mit einem Teilgetriebe-Wechsel verknüpft. Zudem kann im Teilgetriebe B durch ein Schalten der Lastschaltkupplungen K3 auf K2 direkt vom 1. Gang auf den 2. Gang geschaltet werden, ohne dass der 2. Gang im Teilgetriebe A vorgewählt werden müsste. Gleiches trifft auch auf die Gangstufen-Paarungen 7 und 8, 10 und 11 sowie 4 und 5 zu. Ferner ist in der Fig. 9 auch eine direkte Schaltung vom 12. Gang (im Teilgetriebe A) nicht nur auf den 11. Gang (im Teilgetriebe B), sondern auch auf den 10. Gang (ebenfalls im Teilgetriebe B) ermöglicht.

Die Erfindung ist nicht auf die beschriebenen Ausführungsbeispiele beschränkt. Insbesondere können auch weniger als die angeführten Vorwärtsgänge 1 bis 12 vorgesehen sein, mit Entfall der entsprechenden Gang-Zahnradsätze und Synchronkupplungen.

## Patentansprüche

1. Geschwindigkeits-Wechselgetriebe für ein Kraftfahrzeug, mit schaltbaren Zahnradsätzen, die einem ersten Teilgetriebe (A) und einem zweiten Teilgetriebe (B) zugeordnet sind, die jeweils über Eingangswellen (24, 26) mit Lastschaltkupplungen (K1, K2) einer Lastschalteinheit (K) und mit einer gemeinsamen Abtriebswelle (22) verbunden sind, wobei mit einem Lastschaltvorgang eines der Teilgetriebe (A, B) durch Schalten einer der Lastschaltkupplungen (K1, K2) aktivierbar ist, während das andere der Teilgetriebe durch Schalten einer anderen der Lastschaltkupplungen deaktivierbar ist, wobei das Geschwindigkeits-Wechselgetriebe eine zusätzliche Getriebestufe (VG) aufweist, die mit einer dritten Lastschaltkupplung (K3) zuschaltbar ist, die Bestandteil der Lastschalteinheit (K) ist, wobei die zusätzliche Getriebestufe (VG) ein, eine Übersetzungsänderung bewirkendes Vorgelege ist, das dem ersten oder dem zweiten Teilgetriebe (A, B) zugeordnet ist, wobei das Vorgelege (VG) mit zwei axial benachbarten, jeweils zwei Stirnzahnräder (34, 36, 38, 40) aufweisenden Zahnradsätzen (34, 36 und 38, 40) gebildet ist, von denen zwei (36, 38) der Stirnzahnräder zusammengeschaltet sind, wobei ein antreibendes (34) der Stirnzahnräder auf einer dritten Eingangswelle (28) der Lastschaltkupplung (K3) und ein abtreibendes (40) der Stirnzahnräder fest auf der Eingangswelle (26) des korrespondierenden Teilgetriebes (B) angeordnet sind, **dadurch gekennzeichnet, dass** die zwei zusammengeschalteten Stirnzahnräder (36, 38) auf der Abtriebswelle (22) gelagert sind.

2. Wechselgetriebe nach Anspruch 1, **dadurch gekennzeichnet, dass** die drei Kupplungen (K1, K2, K3) koaxial mit den drei Eingangswellen (24, 26, 28) angeordnet sind.

3. Wechselgetriebe nach einem der vorhergehenden Ansprüche, **dadurch gekennzeichnet, dass** das Vorgelege (VG) dem zweiten Teilgetriebe (B) zugeordnet ist.

4. Wechselgetriebe nach einem der vorhergehenden Ansprüche, **dadurch gekennzeichnet, dass** die Übersetzungsänderung des Vorgeleges (VG) so ausgelegt ist, dass über das Vorgelege (VG) und geschlossener, dritter Kupplung (K3) die ungeraden Gänge 1, 5 und gegebenenfalls 9 und ohne das Vorgelege (VG) und geschlossener Kupplung (K2) direkt die Gänge 3, 7 und gegebenenfalls 11 schaltbar sind.

5. Wechselgetriebe nach Anspruch 3 oder 4, **dadurch gekennzeichnet, dass** in das erste Teilgetriebe (A) ein weiteres Vorgelege (42) integriert ist, und dass das weitere Vorgelege (42) mittels einer Schaltkupplung (17) überbrückbar oder zuschaltbar ist.

6. Wechselgetriebe nach Anspruch 5, **dadurch gekennzeichnet, dass** das weitere Vorgelege (42) durch zwei Stirnzahnradsätze (44, 46 und 48, 50) gebildet ist, dessen antreibendes Stirnzahnrad (44) mit der ersten Eingangswelle (24) kuppelbar ist, dessen auf der Abtriebswelle (22) gelagerte Stirnzahnräder (46, 48), insbesondere als Festzahnräder auf einer zur Abtriebswelle (22) koaxialen Vorgelege-Hohlwelle (52), zusammengeschaltet sind und dessen abtreibendes Stirnzahnrad (50) fest auf einer auf der Eingangswelle (24) gelagerten und Schaltzahnräder tragenden Hohlwelle (54) angeordnet ist.

7. Wechselgetriebe nach den Ansprüchen 5 oder 6, **dadurch gekennzeichnet, dass** die auf der Abtriebswelle (22) gelagerten Stirnzahnräder (46, 48), unter Bildung von Gangstufen, insbesondere den 2. Gang und den 4. Gang, über eine Schaltkupplung (19) direkt auf die Abtriebswelle (22) kuppelbar sind.

8. Wechselgetriebe nach Anspruch 7, **dadurch gekennzeichnet, dass** zur Schaltung eines Ganges, insbesondere des 2. Ganges, die Schaltkupplung (17) auf der Eingangswelle (24) mit dem Vorgelege-Antriebszahnrad (44) gekuppelt ist, und dass die Schaltkupplung (19) auf der Abtriebswelle (22) mit der Vorgelege-Hohlwelle (52) gekuppelt ist.

9. Wechselgetriebe nach Anspruch 7 oder 8, **dadurch gekennzeichnet, dass** zur Schaltung einer weiteren Gangstufe, insbesondere des 4. Ganges, die Schaltkupplung (17) auf der Eingangswelle (24) mit dem abtreibenden Vorgelege-Festzahnrad (50) gekuppelt ist, und dass die Schaltkupplung (19) auf der Abtriebswelle (22) mit der Vorgelege-Hohlwelle (52) gekuppelt ist.

10. Wechselgetriebe nach einem der vorhergehenden Ansprüche, **dadurch gekennzeichnet, dass** bei drei Schaltkupplungen (16, 16, 19) auf der gemeinsamen Abtriebswelle (22) und einer Schaltkupplung (17) auf der Eingangswelle (24) des einen Teilgetriebes (A) bis zu 12 Vorwärtsgänge alternierend über die drei Kupplungen (K1, K2, K3) schaltbar sind.

11. Wechselgetriebe nach einem der vorhergehenden Ansprüche, **dadurch gekennzeichnet, dass** die gemeinsame Abtriebswelle (22) über ein Zwischenachsdifferenzial (58) auf ein hinteres Achsdifferenzial und ein vorderes Achsdifferenzial (70) des Kraftfahrzeugs abtreibt, und dass insbesondere in der Axialrichtung betrachtet zwischen den Lastschaltkupplungen (K1, K2, K3) und dem Zwischenachsdifferenzial (58) die Teilgetriebe (A, B) angeordnet sind.

12. Wechselgetriebe nach einem der vorhergehenden Ansprüche, **dadurch gekennzeichnet, dass** die geraden Gänge dem ersten Teilgetriebe (A) und die ungeraden Gänge dem zweiten Teilgetriebe (B) zugeordnet sind.

13. Wechselgetriebe nach Anspruch 3 und Anspruch 12, **dadurch gekennzeichnet, dass** der 1. Gang und der 3. Gang über einen gemeinsamen Zahnradsatz (1/3) im zweiten Teilgetriebe (B) aktivierbar ist, und dass bei bestimmten Fahrsituationen, etwa einem Ampelstart, durch Schalten der Lastschaltkupplung (K3) auf die Lastschaltkupplung (K2) innerhalb des Teilgetriebes (B), ohne einen Teilgetriebe-Wechsel, direkt vom 1. Gang auf den 3. Gang umschaltbar ist, und zwar ohne Vorwählen des dem ersten Teilgetriebe (A) zugeordneten 2. Ganges.

14. Wechselgetriebe nach einem der Ansprüche 1 bis 10, **dadurch gekennzeichnet, dass** die geraden und ungeraden Gänge sowohl dem ersten als auch dem zweiten Teilgetriebe (A, B) zugeordnet sind.

15. Wechselgetriebe nach Anspruch 14, **dadurch gekennzeichnet, dass** im ersten oder im zweiten Teilgetriebe (A, B) die Gangstufen so verteilt sind, dass benachbarte Gangstufen jeweils über einen gemeinsamen Zahnradsatz (10/11, 4/5 und 1/2) aktivierbar sind, und zwar durch Schalten zwischen der Lastschaltkupplung (K3) und der Lastschaltkupplung (K2) ohne einen Teilgetriebe-Wechsel, sondern vielmehr innerhalb des Teilgetriebes (A, B).

16. Wechselgetriebe nach Anspruch 3 und Anspruch 15, **dadurch gekennzeichnet, dass** dem ersten Teilgetriebe (A) der 12. Gang zugeordnet ist und dass dem zweiten Teilgetriebe (B) neben dem 11. Gang auch der 10. Gang zugeordnet ist, so dass ein unmittelbares Rückschalten vom 12. Gang nicht nur auf den 11. Gang, sondern auch auf den 10. Gang ermöglicht ist.

## Claims

1. Change-speed gearbox for a motor vehicle, having shiftable gear sets which are assigned to a first sub-transmission (A) and to a second sub-transmission (B), which are each connected via input shafts (24, 26) to powershift clutches (K1, K2) of a powershift unit (K) and to a common output shaft (22), wherein one of the sub-transmissions (A, B) is activable by means of the shifting of one of the powershift clutches (K1, K2) with a powershift operation, while the other of the sub-transmissions can be deactivated by means of the shifting of another of the powershift clutches, wherein the change-speed transmission has an additional gear stage (VG) which is engagable with a third powershift clutch (K3) which is a component of the powershift unit (K), wherein the additional gear stage (VG) is a countershaft which brings about a change in transmission ratio and is assigned to the first or the second sub-transmission(A, B), wherein the countershaft (VG) is formed with two axially adjoining gear sets (34, 36 and 38, 40) each having two spur gears (34, 36 and 38, 40), of which two (36, 38) of the spur gears are interconnected, wherein a driving one (34) of the spur gears is fixedly arranged on a third input shaft (28) of the powershift clutch (K3) and an outputting one (40) of the spur gears is fixedly arranged on the input shaft (26) of the corresponding sub-transmission(B), **characterised in that** the two interconnected spur gears (36, 38) are mounted on the output shaft (22).

2. Change-speed gearbox according to claim 1, **characterised in that** the three clutches (K1, K2, K3) are arranged coaxial to the three input shafts (24, 26, 28).

3. Change-speed gearbox according to any one of the preceding claims, **characterised in that** the countershaft (VG) is assigned to the second sub-transmission (B).

4. Change-speed gearbox according to any one of the preceding claims, **characterised in that** the change in transmission ratio of the countershaft (VG) is configured such that the odd gears 1, 5 and optionally 9 are shiftable via the countershaft (VG) and closed, third clutch (K3) and, without the countershaft (VG) and closed clutch (K2), gears 3, 7 and optionally 11 are directly shiftable.

5. Change-speed gearbox according to claim 3 or 4, **characterised in that** a further countershaft (42) is integrated into the first sub-transmission (A), and **in that** the further countershaft (42) can be bypassed or engaged by means of a clutch coupling (17).

6. Change-speed gearbox according to claim 5, **characterised in that** the further countershaft (42) is formed by two spur gear sets (44, 46 and 48, 50), the driving spur gear (44) of which can be coupled to the first input shaft (24), the spur gears (46, 48) of which, mounted on the output shaft (22), are interconnected, in particular as fixed gears on an countershaft hollow shaft (52) coaxially to the output shaft (22), and the driving spur gear (50) of which is arranged fixedly on a hollow shaft (54) mounted on the input shaft (24) and carrying control gears.

7. Change-speed gearbox according to claim 5 or 6, **characterised in that** the spur gears (46, 48) mounted on the output shaft (22) can be coupled directly to the output shaft (22) via a clutch coupling (19), forming gear stages, in particular the 2nd gear and the 4th gear.

8. Change-speed gearbox according to claim 7, **characterised in that**, for the shifting of a gear, in particular the 2nd gear, the clutch coupling (17) on the input shaft (24) is coupled to the countershaft drive gearwheel (44), and **in that** the clutch coupling (19) on the output shaft (22) is coupled to the countershaft hollow shaft (52).

9. Change-speed gearbox according to claim 7 or 8, **characterised in that**, in order to shift a further gear stage, in particular the 4th gear, the clutch coupling (17) on the input shaft (24) is coupled to the outputting countershaft fixed gearwheel (50), and **in that** the clutch coupling (19) on the output shaft (22) is coupled to the countershaft hollow shaft (52).

10. Change-speed gearbox according to any one of the preceding claims, **characterised in that**, for three clutch couplings (16, 16, 19) on the common output shaft (22) and one clutch coupling (17) on the input shaft (24) of one sub-transmission(A), up to 12 forward gears are shiftable alternately via the three clutches (K1, K2, K3).

11. Change-speed gearbox according to any one of the preceding claims, **characterised in that** the common output shaft (22) outputs via an inter-axle differential (58) onto a rear axle differential and a front axle differential (70) of the motor vehicle, and **in that**, in particular viewed in the axial direction, the sub-transmissions (A, B) are arranged between the powershift clutches (K1, K2, K3) and the inter-axle differential (58).

12. Change-speed gearbox according to any one of the preceding claims, **characterised in that** the even gears are assigned to the first sub-transmission(A) and the odd gears to the second sub-transmission(B).

13. Change-speed gearbox according to claims 3 and 12, **characterised in that** the 1st gear and the 3rd gear are activable via a common gear set (1/3) in the second sub-transmission (B), and **in that**, in certain driving situations, such as a traffic light start, by the shifting of the powershift clutch (K3) to the powerswitch clutch (K2) within the sub-transmission (B), without a sub-transmission change, the clutch (K2) is shiftable directly from 1st gear to 3rd gear, without the pre-selection of the 2nd gear assigned to the first sub-transmission (A).

14. Change-speed gearbox according to any one of claims 1 to 10, **characterised in that** the even and odd gears are assigned to both the first and the second sub-transmission (A, B).

15. Change-speed gearbox according to claim 14, **characterised in that** in the first or in the second sub-transmission (A, B) the gear stages are distributed in such a way that adjoining gear stages are each activable via a common gear set (10/11, 4/5 and 1/2), namely by shifting between the powershift clutch (K3) and the powershift clutch (K2) without a sub-transmission change, but rather within the sub-transmission (A, B).

16. Change-speed gearbox according to claims 3 and claim 15, **characterised in that** the 12th gear is assigned to the first sub-transmission (A) and **in that** the 10th gear is assigned to the second sub-transmission (B) in addition to the 11th gear, so that a direct downshifting from the 12th gear is possible not only to the 11th gear but also to the 10th gear.

## Revendications

1. Boîte de changement de vitesse pour un véhicule automobile, avec des jeux de roues dentées commutables, qui sont associés à une première transmission partielle (A) et à une seconde transmission partielle (B), qui sont reliées respectivement par le biais d'arbres d'entrée (24, 26) à des embrayages de commutation de charge (K1, K2) d'une unité de commutation de charge (K) et à un arbre de sortie (22) commun, dans laquelle une des transmissions partielles (A, B) est activable avec une opération de commutation de charge par commutation d'un des embrayages de commutation de charge (K1, K2), pendant que l'autre des transmissions partielles est désactivable par commutation d'un autre des embrayages de commutation de charge, dans laquelle la boîte de changement de vitesse présente un étage de transmission supplémentaire (VG), qui est activable avec un troisième embrayage de commutation de charge (K3), qui fait partie de l'unité de commutation de charge (K), dans laquelle l'étage de transmission supplémentaire (VG) est une transmission intermédiaire provoquant un changement de rapport, qui est associée à la première ou à la seconde transmission partielle (A, B), dans laquelle la transmission intermédiaire (VG) est formée avec deux jeux de roues dentées (34, 36 et 38, 40) adjacents, présentant respectivement deux roues dentées droites (34, 36, 38, 40), dont deux (36, 38) des roues dentées droites sont interconnectées, dans laquelle une roue d'entraînement (34) des roues dentées droites est agencée sur un troisième arbre d'entrée (28) de l'embrayage de commutation de charge (K3) et une roue de sortie (40) des roues dentées droites est agencée fixement sur l'arbre d'entrée (26) de la transmission partielle (B) correspondante, **caractérisée en ce que** les deux roues dentées droites interconnectées (36, 38) sont logées sur l'arbre de sortie (22).

2. Boîte de vitesse selon la revendication 1, **caractérisée en ce que** les trois embrayages (K1, K2, K3) sont agencés coaxialement avec les trois arbres d'entrée (24, 26, 28).

3. Boîte de vitesse selon l'une quelconque des revendications précédentes, **caractérisée en ce que** la transmission intermédiaire (VG) est associée à la seconde transmission partielle (B).

4. Boîte de vitesse selon l'une quelconque des revendications précédentes, **caractérisée en ce que** le changement de rapport de la transmission intermédiaire (VG) est conçu de sorte que les vitesses impaires 1, 5 et le cas échéant 9 sont commutables par le biais de la transmission intermédiaire (VG) et du troisième embrayage (K3) fermé, et les vitesses 3, 7 et le cas échéant 11 sont commutables directement sans la transmission intermédiaire (VG) et embrayage (K2) fermé.

5. Boîte de vitesse selon la revendication 3 ou 4, **caractérisée en ce qu'**une autre transmission intermédiaire (42) est intégrée dans la première transmission partielle (A), et que l'autre transmission intermédiaire (42) peut être pontée ou raccordée au moyen d'un embrayage de commutation (17).

6. Boîte de vitesse selon la revendication 5, **caractérisée en ce que** l'autre transmission intermédiaire (42) est formée par deux jeux de roues dentées droites (44, 46 et 48, 50), dont la roue dentée droite d'entraînement (44) peut être couplée avec le premier arbre d'entrée (24), dont les roues dentées droites (46, 48) logées sur l'arbre de sortie (22), en particulier en tant que roues dentées fixes sur un arbre creux de transmission intermédiaire (52) coaxial à l'arbre de sortie (22), sont interconnectées, et dont la roue dentée droite de sortie (50) est agencée fixement sur un arbre creux (54) logé sur l'arbre d'entrée (24) et portant des roues dentées de commutation.

7. Boîte de vitesse selon les revendications 5 ou 6, **caractérisée en ce que** les roues dentées droites (46, 48) logées sur l'arbre de sortie (22) peuvent être couplées directement sur l'arbre de sortie (22) par le biais d'un embrayage de commutation (19), en formant des rapports de vitesses, en particulier la deuxième vitesse et la quatrième vitesse.

8. Boîte de vitesse selon la revendication 7, **caractérisée en ce que** pour engager une vitesse, en particulier la deuxième vitesse, l'embrayage de commutation (17) est couplé sur l'arbre d'entrée (24) avec la roue dentée d'entraînement de transmission intermédiaire (44), et que l'embrayage de commutation (19) est couplé sur l'arbre de sortie (22) avec l'arbre creux de transmission intermédiaire (52).

9. Boîte de vitesse selon la revendication 7 ou 8, **caractérisée en ce que** pour engager une autre vitesse, en particulier la quatrième vitesse, l'embrayage de commutation (17) est couplé sur l'arbre d'entrée (24) avec la roue dentée fixe de transmission intermédiaire de sortie (50), et que l'embrayage de commutation (19) est couplé sur l'arbre de sortie (22) avec l'arbre creux de transmission intermédiaire (52).

10. Boîte de vitesse selon l'une quelconque des revendications précédentes, **caractérisée en ce que** jusqu'à 12 vitesses en marche avant sont commutables en alternance par le biais des trois embrayages (K1, K2, K3) pour trois embrayages de commutation (16, 16, 19) sur l'arbre de sortie (22) commun et un embrayage de commutation (17) sur l'arbre d'entrée (24) de l'une transmission partielle (A).

11. Boîte de vitesse selon l'une quelconque des revendications précédentes, **caractérisée en ce que** l'arbre de sortie (22) commun agit en sortie par le biais d'un différentiel d'axe intermédiaire (58) sur un différentiel d'axe arrière et un différentiel d'axe avant (70) du véhicule automobile, et que les transmissions partielles (A, B) sont agencées en particulier vu dans la direction axiale entre les embrayages de commutation de charge (K1, K2, K3) et le différentiel d'axe intermédiaire (58).

12. Boîte de vitesse selon l'une quelconque des revendications précédentes, **caractérisée en ce que** les vitesses paires sont associées à la première transmission partielle (A) et les vitesses impaires sont associées à la seconde transmission partielle (B).

13. Boîte de vitesse selon la revendication 3 et la revendication 12, **caractérisée en ce que** la première vitesse et la troisième vitesse sont activables par le biais d'un jeu de roues dentées commun (1/3) dans la seconde transmission partielle (B), et que dans des situations de conduite déterminées, par exemple un démarrage à un feu rouge, il est possible de commuter directement de la première vitesse à la troisième vitesse par commutation de l'embrayage de commutation de charge (K3) sur l'embrayage de commutation de charge (K2) à l'intérieur de la seconde transmission partielle (B), sans changement de transmission partielle, et ce sans présélection de la deuxième vitesse associée à la première transmission partielle (A).

14. Boîte de vitesse selon l'une quelconque des revendications 1 à 10, **caractérisée en ce que** les vitesses paires et impaires sont associées aussi bien à la première qu'à la seconde transmission partielle (A, B).

15. Boîte de vitesse selon la revendication 14, **caractérisée en ce que** les rapports de vitesses sont répartis dans la première ou dans la seconde transmission partielle (A, B) de sorte que des rapports de vitesses adjacents sont activables respectivement par le biais d'un jeu de roues dentées commun (10/11, 4/5 et 1/2), et ce par commutation entre l'embrayage de commutation de charge (K3) et l'embrayage de commutation de charge (K2) sans changement de transmission partielle, mais plutôt à l'intérieur de la transmission partielle (A, B).

16. Boîte de vitesse selon la revendication 3 et la revendication 15, **caractérisée en ce que** la douzième vitesse est associée à la première transmission partielle (A) et qu'en plus de la onzième vitesse aussi la dixième vitesse est associée à la seconde transmission partielle (B) de sorte qu'une rétrogradation directe de la douzième vitesse non seulement à la onzième vitesse, mais aussi à la dixième vitesse est possible.
